# EUROPÄISCHE PATENTSCHRIFT

(11) **EP 1 885 100 B1**
(45) Veröffentlichungstag und Bekanntmachung des Hinweises auf die Patenterteilung: **08.04.2009**
(21) Anmeldenummer: 06016149.4
(22) Anmeldetag: 02.08.2006
(51) Int. Cl.: H04L 29/12, H04L 12/24

(54) **Verfahren zur automatischen Adressvergabe an einen Kommunikationsteilnehmer und Kommunikationsteilnehmer**
Method for automatic address allocation between communication devices
Méthode d'attribution d'adresses à des terminaux de communication

(43) Veröffentlichungstag der Anmeldung: 06.02.2008
(73) Patentinhaber: SIEMENS AKTIENGESELLSCHAFT, 80333 München (DE)
(72) Erfinder: Maul, Jürgen, 92237 Sulzbach-Rosenberg (DE); Tretter, Albert, 92712 Pirk (DE)

(56) Entgegenhaltungen:
- EP-A2- 0 887 980
- EP-A2- 1 032 162
- DE-C1- 10 048 745

## Beschreibung

Die Erfindung betrifft ein Verfahren zur automatischen Adressvergabe an zumindest einen, von einem Netzwerk umfassten Kommunikationsteilnehmer, wobei ein von dem Netzwerk ebenfalls umfasster primärer Kommunikationsteilnehmer ein Datum an den oder einen der Kommunikationsteilnehmer übermittelt und wobei der jeweilige Kommunikationsteilnehmer einen Vergleich des Datums mit einem Referenzdatum vornimmt. Sie betrifft weiter einen Kommunikationsteilnehmer sowie ein Automatisierungssystem zur Durchführung des Verfahrens sowie ein Automatisierungssystem mit einem solchen Kommunikationsteilnehmer.

Unterschiedliche Verfahren zur Adressvergabe in Kommunikationssystemen sind allgemein bekannt.

Beispielsweise wird bei einer Ethernet-Anwendung in jedem Ethernet-Controller eine gegebenenfalls weltweit eindeutige MAC-(Media Access Control)-Adresse remanent hinterlegt, mittels welcher eine Adressierung erfolgt. Eine Ermittlung einer Topologie eines sich ergebenden Netzwerkes ist schwierig und wird beispielsweise mittels eines Zusatzprotokolls, z.B. mittels des LLDP-Protokolls (Link Layer Discovery Protocol), mit dem Daten über alle Verknüpfungspunkte des Netzwerkes ermittelt werden, durchgeführt. MAC-Adressen werden ebenfalls bei so genannten Feldbussen, namentlich dem PROFIBUS, beispielsweise nach Einstellung durch einen Nutzer, remanent hinterlegt. Hinsichtlich einer Topologieermittlung ergeben sich dabei aber wieder die oben skizzierten Probleme. Bei einem alternativen Verfahren wird zu jedem Steckplatz eines parallelen Backplane Systems eine Modul-Select Steuerleitung verlegt. Da die am Bus angelegten Adressen am Steckplatz oder Modul nur bei aktiver Modul-Select Steuerleitung gültig sind, ergeben sich Restriktionen bei der Rackkopplung und der Topologieermittlung.

Die Druckschrift EP 0887980 A2 beschreibt ein Adresssetzverfahren in einem Kommunikationssystem wobei die Teilnehmer ihre eigenen Adressen setzen durch Zirkulieren von Kommunikationsdaten, so dass eine gegenseitige Unterscheidung ihrer Identität ermöglicht wird.

Der Erfindung liegt die Aufgabe zugrunde, ein besonders geeignetes Verfahren zur automatischen Adressvergabe an zumindest einen, von einem Netzwerk umfassten Kommunikationsteilnehmer anzugeben, wobei ein von dem Netzwerk ebenfalls umfasster primärer Kommunikationsteilnehmer ein Datum an den oder einen der Kommunikationsteilnehmer übermittelt und wobei der jeweilige Kommunikationsteilnehmer einen Vergleich des Datums mit einem Referenzdatum vornimmt. Dazu ist vorgesehen, dass in Abhängigkeit vom Ergebnis des Vergleichs entweder dem jeweiligen Kommunikationsteilnehmer eine Adresse zugewiesen wird oder das Datum an einen dem jeweiligen Kommunikationsteilnehmer im Netzwerk nachfolgenden Kommunikationsteilnehmer übermittelt und im Zusammenhang mit der Übermittlung des Datums an den nachfolgenden Kommunikationsteilnehmer das Datum modifiziert wird.

Darüber hinaus soll ein zur Durchführung des Verfahrens besonders geeigneter Kommunikationsteilnehmer mit einer Empfangseinrichtung zum Empfang eines Datums und einem Komparator zum Vergleich des Datums mit einem Referenzdatum angegeben werden. In dieser Hinsicht ist vorgesehen, dass der Kommunikationsteilnehmer eine Verarbeitungseinheit umfasst, welche zur Zuweisung einer Adresse an den Kommunikationsteilnehmer und zur Übermittlung des Datums an eine Sendeeinrichtung des Kommunikationsteilnehmers jeweils in Abhängigkeit vom Ergebnis des Vergleichs vorgesehen ist, und dass die Verarbeitungseinheit zur Modifizierung des Datums im Zusammenhang mit der Übermittlung des Datums an die Sendeeinrichtung vorgesehen ist. Zudem wird ein Computerprogramm mit durch einen Computer ausführbaren Programmcodeanweisungen zur Implementierung des Verfahrens sowie nachfolgend beschriebener Ausgestaltungen, wenn das Computerprogramm auf einem Computer ausgeführt wird, und ein Computerprogrammprodukt, insbesondere Speichermedium, mit einem durch einen Computer ausführbaren derartigen Computerprogramm angegeben. Darüber hinaus wird ein Automatisierungssystem mit Programmcodemitteln zur Durchführung eines solchen Verfahrens sowie ein Automatisierungssystem mit zumindest einem erfindungsgemäßen Kommunikationsteilnehmer und einem primären Kommunikationsteilnehmer angegeben. Auf Seiten des primären Kommunikationsteilnehmers ist dabei eine Verarbeitungseinheit zur Übermittlung eines ein Datum und eine Adresse umfassenden Datensatzes an einen der Kommunikationsteilnehmer, der entweder direkt oder indirekt, nämlich über eine kommunikative Verbindung mit einem oder mehreren anderen Kommunikationsteilnehmern, mit dem primären Kommunikationsteilnehmer kommunikativ verbindbar ist, vorgesehen.

Zweckmäßige Weiterbildungen der unabhängigen Ansprüche sind Gegenstand der Unteransprüche. In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

In einer Ausführungsform übermittelt der primäre Kommunikationsteilnehmer, welcher im Netzwerk beispielsweise als ein Master fungiert, einen das Datum und die Adresse umfassenden Datensatz an den oder einen der Kommunikationsteilnehmer, was eine gleichzeitige Übermittlung des Datums und der Adresse ermöglicht. Mindestens eine Adresse oder der Datensatz kann dabei in einer Datenbasis hinterlegt oder hinterlegbar sein, auf welche beispielsweise der primäre Kommunikationsteilnehmer Zugriff hat. Der primäre Kommunikationsteilnehmer kann beispielsweise den in der Datenbasis hinterlegten Datensatz übermitteln oder aus der hinterlegten Adresse und mindestens einem Datum, gegebenenfalls im Zusammenhang mit der Übermittlung, den zu übermittelnden Datensatz erzeugen. Der primäre Kommunikationsteilnehmer kann den Datensatz entweder selbst übermitteln oder einen anderen Kommunikationsteilnehmer zur Übermittlung veranlassen. Hierzu ist beispielsweise eine übermittlung eines Initiationstelegramms vorgesehen, welches ausschließlich oder nicht-ausschließlich die Adresse, den Datensatz oder beispielsweise ein Signal zur Erzeugung des Datensatzes durch den oder einen anderen Kommunikationsteilnehmer umfasst.

In einer bevorzugten Ausführungsform umfasst das Modifizieren des Datums dessen Inkrementierung oder Dekrementierung entsprechend einer vorgegebenen oder vorgebbaren Schrittweite, insbesondere einer Schrittweite von "eins". Dazu sind beispielsweise elektronische Bauteile, Signalgeber, oder computerimplementierbare mathematische oder logische Algorithmen oder Operationen vorgesehen. Die Schrittweite kann variabel oder variierbar sein, wobei eine Variation beispielsweise manuell oder automatisiert, anhand mindestens einer hinterlegten oder hinterlegbaren Regel, erfolgen kann. Hierdurch wird eine Anpassung der Modifikation des Datums beispielsweise an Erfordernisse für unterschiedliche Kommunikationssysteme, z.B. eine Anzahl der Kommunikationsteilnehmer, oder unterschiedliche Referenzdaten ermöglicht.

Besonders bevorzugt erfolgt die Inkrementierung oder Dekrementierung durch einen Kommunikationsteilnehmer, welchem mittels der automatischen Adressvergabe eine Adresse zugewiesen werden soll. Hierdurch wird eine einfache Adressvergabe in einem Kommunikationssystem mit einer kettenförmigen Struktur bedingt, da im Zusammenhang mit jeder Übermittlung des Datums von einem vorangehenden an einen nachfolgenden Kommunikationsteilnehmer das Datum inkrementiert oder dekrementiert wird. Kommunikationsteilnehmer, die eine Inkrementierung oder Dekrementierung vornehmen, sind z.B. solche Kommunikationsteilnehmer, die im Netzwerk als Slave oder "Hub" fungieren. Als Hub wird dabei und im Folgenden ein Kommunikationsteilnehmer mit einer Anzahl von Ports bezeichnet, mittels derer andere Kommunikationsteilnehmer mit dem als Verteiler dienenden Hub verbunden werden können. Wenn mehrere Kommunikationsteilnehmer über einen Hub verbunden sind und diesem ein Datum übermittelt wird, so übermittelt der Hub das inkrementierte oder dekrementierte Datum an jeden mit ihm verbundenen Kommunikationsteilnehmer. Eine Inkrementierung oder Dekrementierung des Datums erfolgt dabei sukzessiv im Zusammenhang mit jedem Übermitteln des Datums, d.h. der Hub inkrementiert oder dekrementiert das Datum für jeden mit ihm verbundenen Kommunikationsteilnehmer und zwar gegebenenfalls mehrfach in Abhängigkeit von einer Port-Nummer oder einer Anzahl der mit dem Hub verbundenen Kommunikationsteilnehmer. Zusätzlich oder alternativ kann mindestens ein Subdatum mit dem Datum assoziiert sein. Eine Auswertung des Subdatums durch nachfolgende Kommunikationsteilnehmer erfolgt dabei genau wie die vorangehend beschriebene Auswertung des Datums. Damit ergibt sich gleichsam eine rekursive Anwendung des Ansatzes gemäß der Erfindung auch für durch einen Hub aufgespannte Teilnetzwerke.

Bei einer gemischten ketten- und sternförmigen Struktur des Netzwerks wird beispielsweise im Zusammenhang mit einer Übermittlung des Datums und des Subdatums von einem Hub an einen mit einem Port des Hubs verbundenen Kommunikationsteilnehmer zunächst das Datum modifiziert. Nachfolgend wird dann im Zusammenhang mit der Übermittlung des Datums und des Subdatums an mindestens einen mit dem Hub verbundenen Kommunikationsteilnehmer oder nachfolgenden Kommunikationsteilnehmern das Subdatum modifiziert, z.B. inkrementiert oder dekrementiert, beispielsweise durch den Kommunikationsteilnehmer, und nunmehr, wo zuvor das Datum mit dem Referenzdatum verglichen wurde, das Subdatum mit dem Referenzdatum verglichen. Bei den nachfolgenden Kommunikationsteilnehmern kann es sich wiederum beispielsweise um mindestens einen Slave oder Hub handeln. Im Falle eines weiteren Hubs erfolgt eine nochmals rekursive Anwendung des Adresszuordnung des Verfahrens, wobei nunmehr das Subdatum um ein weiteres Subdatum ergänzt wird. Hierdurch kann auf einfache Weise in einem Kommunikationssystem, z.B. mit sternförmiger Struktur oder gemischter stern- und kettenförmiger Struktur, die Adressvergabe an sämtliche Kommunikationsteilnehmer erfolgen.

In einer bevorzugten Ausführungsform wird, insbesondere im Zusammenhang mit dem Zuweisen der Adresse an den jeweiligen Kommunikationsteilnehmer, durch diesen eine Antwort an einen zu einer Verarbeitung der Antwort vorgesehenen Kommunikationsteilnehmer, insbesondere den primären Kommunikationsteilnehmer, übermittelt. Der primäre Kommunikationsteilnehmer kann die übermittelte Antwort entweder selbst ablegen, z.B. in einer ihm zugeordneten Datenbasis, oder an einen dazu vorgesehenen anderen Kommunikationsteilnehmer weiterleiten, welcher seinerseits die Antwort in einer Datenbasis ablegen kann. Sowohl der primäre Kommunikationsteilnehmer als auch der andere Kommunikationsteilnehmer können dazu vorgesehen sein, die Antwort zu verarbeiten, um aus dieser gegebenenfalls in Kombination mit von anderen Kommunikationsteilnehmern erhaltenen Antworten Informationen bezüglich einer Netztopologie, also einer räumlichen Anordnung der Kommunikationsteilnehmer in dem Netzwerk, zu ermitteln. Wenn bei der automatischen Adressvergabe durch den primären Kommunikationsteilnehmer jeweils immer nur ein Datensatz übermittelt wird, kann anhand einer nachfolgend übermittelten Antwort des einen Kommunikationsteilnehmers, welchem die Adresse zugewiesen wurde, die räumliche Anordnung der Kommunikationsteilnehmer anhand der ursprünglich übermittelten Daten, also dem Datensatz, insbesondere dem Datum, einfach ermittelt werden. Alternativ kann vorgesehen sein, dass der primäre Kommunikationsteilnehmer zwei oder mehr Datensätze übermittelt. Dann wird von dem Kommunikationsteilnehmer, welchem die Adresse zugewiesen wurde, beispielsweise eine Antwort an den primären Kommunikationsteilnehmer übermittelt, welche eine zusätzliche Information zur Identifizierung des ursprünglich zur Adressvergabe an diesen Kommunikationsteilnehmer übermittelten Datums enthält. Die damit gewährleistete Zuordenbarkeit der Antwort zu dem ursprünglich übermittelten Datum ermöglicht somit wiederum eine einfache Topologieermittlung.

Besonders bevorzugt wird mit der oder jeder Antwort mindestens ein dem jeweiligen Kommunikationsteilnehmer zugeordnetes Eigenschaftsdatum, insbesondere ein Topologiedatum, übermittelt. Wenn durch den zur Verarbeitung der Antwort vorgesehenen Kommunikationsteilnehmer, insbesondere den primären Kommunikationsteilnehmer, anhand des Eigenschaftsdatums eine Topologie des Netzwerks ermittelt wird, kann diese beispielsweise von dem primären Kommunikationsteilnehmer in einer Datenbasis hinterlegt werden. Dann kann die Topologie des Netzwerkes, beispielsweise bezüglich einer Erreichbarkeit oder Aktivität eines Kommunikationsteilnehmers, ausgewertet werden. Weitere Möglichkeiten zur Auswertung der Topologie bestehen in einer Erkennung alternativer kommunikativer Verbindungen zwischen Kommunikationsteilnehmern, einer Erkennung einer Kopplung bestimmter Kommunikationsteilnehmer, einer Erkennung einer Kopplung von Racks, also von Haltevorrichtungen für Kommunikationsteilnehmer, oder einer Ermittlung allgemeiner Informationen bezüglich der Kopplung oder der kommunikativen Verbindung von Kommunikationsteilnehmern oder Racks.

Wenn die ermittelte Topologie des Netzwerks von dem primären Kommunikationsteilnehmer ausgewertet wird, um auf Basis eines Ergebnisses der Auswertung eine Adressierung von mindestens einem zu übermittelnden Telegramm durchzuführen, sind bisher nicht oder nur mit unverhältnismäßig hohem Aufwand realisierbare Adressierungsarten durchführbar. Z.B. sind Telegramme an alle Kommunikationsteilnehmer in einem bestimmten Bussegment oder Telegramme an alle Kommunikationsteilnehmer, die einem bestimmten Kommunikationsteilnehmer nachfolgen, möglich.

Bei einer bevorzugten Ausführungsform des Kommunikationsteilnehmers umfasst dessen Verarbeitungseinheit Mittel zur Modifizierung des Datums. Als Mittel zur Modifizierung des Datums kommen dabei z.B. elektronische Bauteile wie Signalgeber oder computerimplementierbare mathematische oder logische Algorithmen oder Operationen zur Inkrementierung oder Dekrementierung des Datums entsprechend einer vorgegebenen oder vorgebbaren Schrittweite in Betracht.

Besonders bevorzugt ist die Verarbeitungseinheit zur Übermittlung einer Antwort an die Sendeeinheit vorgesehen. Die Übermittlung der Antwort erfolgt dabei bevorzugt im Zusammenhang mit der Zuweisung der Adresse, wobei "im Zusammenhang" hier vor, während oder nach der Zuweisung der Adresse meint. Die Antwort kann beispielsweise in Form eines Antworttelegramms übermittelt werden. Dieses ist z.B. vor der Übermittlung hinterlegt, beispielsweise in einer Datenbasis, oder wird im Zusammenhang mit dem Übermitteln erzeugt. Dabei kann die Antwort beispielsweise inhaltlich identisch mit oder ähnlich dem Datum oder einem mindestens das Datum umfassenden Datensatz sein. Alternativ oder zusätzlich kann die Antwort beispielsweise Information in Bezug auf eine oder mehrere Eigenschaften des Kommunikationsteilnehmers umfassen, wie z.B. mindestens ein Topologiedatum, eine Seriennummer des Kommunikationsteilnehmers, eine Softwareversionsnummer, eine Port-Anzahl oder Informationen im Hinblick auf eine Verknüpfung mit Kommunikationsteilnehmern auf einem nachfolgenden Rack.

Die oben genannte Aufgabe wird des Weiteren auch mit einem Automatisierungssystem mit Mitteln, insbesondere Programmcodemitteln, zur Durchführung des beschriebenen Verfahrens oder seiner Ausgestaltungen gelöst. Schließlich wird die Aufgabe auch durch ein Automatisierungssystem mit zumindest einem Kommunikationsteilnehmer der oben oder nachfolgend beschriebenen Art sowie einem primären Kommunikationsteilnehmer mit einer Verarbeitungseinheit gelöst. Die Verarbeitungseinheit des primären Kommunikationsteilnehmers ist dabei zur Übermittlung eines ein Datum und eine Adresse umfassenden Datensatzes an einen der Kommunikationsteilnehmer, der entweder direkt oder indirekt, nämlich über eine kommunikative Verbindung mit einem oder mehreren anderen Kommunikationsteilnehmern, mit dem primären Kommunikationsteilnehmer kommunikativ verbindbar ist, vorgesehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Nachfolgend wird ein Ausführungsbeispiel der Erfindung anhand der Zeichnungen näher erläutert. Einander entsprechende Gegenstände oder Elemente sind in allen Figuren mit den gleichen Bezugszeichen versehen.

Darin zeigen
- FIG 1: eine schematisch vereinfachte Darstellung eines erfindungsgemäßen Verfahrens zu einer automatischen Adressvergabe.
- FIG 2: eine schematische Darstellung einer Ausgestaltung des Verfahrens zur automatischen Adressvergabe.
- FIG 3: eine schematische Darstellung einer weiteren Ausgestaltung des Verfahrens zur automatischen Adressvergabe.
- FIG 4: eine schematische Darstellung eines alternativen Verfahrens zur automatischen Adressvergabe.
- FIG 5: eine schematische Darstellung eines Kommunikationsteilnehmers.

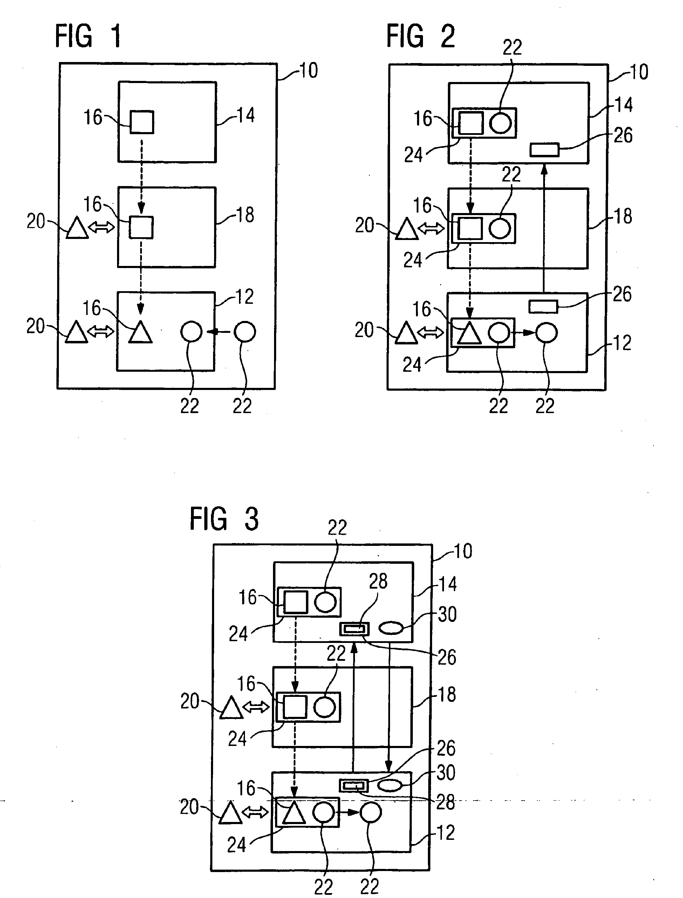

FIG 1 zeigt eine schematisch vereinfachte Darstellung zur Erläuterung des erfindungsgemäßen Verfahrens zur automatischen Adressvergabe an einen von einem Netzwerk 10 umfassten Kommunikationsteilnehmer 12. Ein von dem Netzwerk 10 ebenfalls umfasster primärer Kommunikationsteilnehmer 14 übermittelt zur Adressvergabe ein Datum 16 an einen ersten Kommunikationsteilnehmer 18 und dieser erste Kommunikationsteilnehmer 18 führt einen Vergleich des Datums 16 mit einem Referenzdatum 20 durch. Bei einem Nicht-Übereinstimmen des übermittelten Datums 16 mit dem Referenzdatum 20 wird das Datum 16 an einen dem ersten Kommunikationsteilnehmer 18 im Netzwerk 10 nachfolgenden Kommunikationsteilnehmer 12 übermittelt. Im Zusammenhang mit der Übermittlung des Datums 16, also vor, während oder nach dem Übermitteln an den nachfolgenden Kommunikationsteilnehmer 12, wird das Datum 16 durch den ersten Kommunikationsteilnehmer 18 oder den nachfolgenden Kommunikationsteilnehmer 12 modifiziert. Der nachfolgende Kommunikationsteilnehmer 12 führt nun seinerseits einen Vergleich des Datums 16 mit dem Referenzdatum 20 durch und bei einem Übereinstimmen des Datums 16 mit dem Referenzdatum 20 wird dem Kommunikationsteilnehmer 12 eine Adresse 22 zugewiesen, welche beispielsweise von dem primären Kommunikationsteilnehmer 14 an den Kommunikationsteilnehmer 12 übermittelt wird.

FIG 2 zeigt eine schematische Darstellung einer Ausgestaltung des Verfahrens zur automatischen Adressvergabe, welches in seinen Grundzügen dem in FIG 1 beschrieben entspricht. Dabei wird jedoch jeweils ein das Datum 16 und die Adresse 22 umfassender Datensatz 24 von dem primären Kommunikationsteilnehmer 14 an den ersten und den nachfolgenden Kommunikationsteilnehmer 18, 12 übermittelt. Zusätzlich kann im Zusammenhang mit der Zuweisung der Adresse 22 eine Übermittlung einer Antwort 26, z.B. zur Bestätigung der erfolgten Adresszuweisung und/oder zur Information, dass die zugewiesene Adresse damit im weiteren Verlauf der automatischen Adresszuweisung nicht mehr zur Verfügung steht, an den primären Kommunikationsteilnehmer 14 vorgesehen sein.

FIG 3 zeigt eine schematische Darstellung einer weiteren Ausgestaltung des Verfahrens zur automatischen Adressvergabe, welches in seinen Grundzügen dem in FIG 2 beschrieben entspricht. Mit der Zuweisung der Adresse 22 an den Kommunikationsteilnehmer 12 wird von diesem eine Antwort 26, welche nunmehr zusätzlich ein Eigenschaftsdatum 28 des Kommunikationsteilnehmers 12 enthält, an den primären Kommunikationsteilnehmer 14 übermittelt. Anhand des Eigenschaftsdatums 28 wird eine Topologie des Netzwerks 10 ermittelt und diese von dem primären Kommunikationsteilnehmer 14 ausgewertet, um auf Basis dieser Auswertung z.B. eine Adressierung von mindestens einem zu übermittelndem Telegramm 30 durchzuführen.

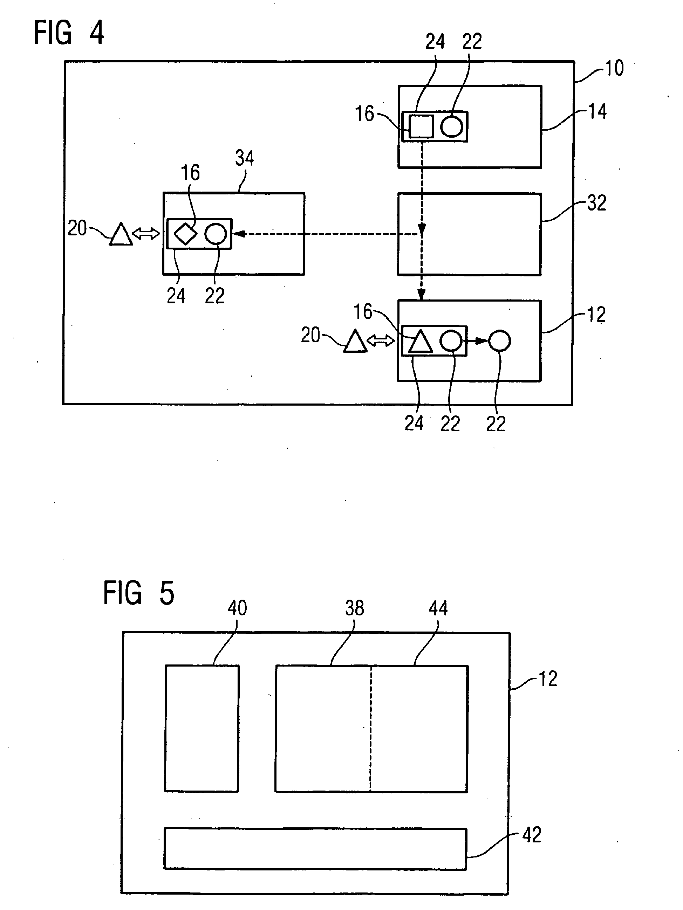

FIG 4 zeigt eine schematische Darstellung eines alternativen Verfahrens zur automatischen Adressvergabe an einen von dem Netzwerk 10 umfassten Kommunikationsteilnehmer 12. Der primäre Kommunikationsteilnehmer 14 übermittelt das Datum 16 an einen Kommunikationsteilnehmer, an den anders als bei den bisher betrachteten Kommunikationsteilnehmern mehrere Kommunikationsteilnehmer angeschlossen sind und der im Folgenden und gemäß dem in soweit üblichen Sprachgebrauch kurz als "Hub" 32 bezeichnet wird, welcher das Datum 16 an die mit ihm verbundenen Kommunikationsteilnehmer 12, 34 übermittelt. Im Zusammenhang mit der Übermittlung des Datums 16, also vor, während oder nach dem Übermitteln an die Kommunikationsteilnehmer 34, 12, wird das Datum 16 durch den Hub 32 modifiziert. Dabei erfolgt für jeden Port eine Modifikation des Datums in der oben beschriebenen Art und Weise. D.h. bei einem ersten Port wird das Datum erstmalig modifiziert, also z.B. inkrementiert oder dekrementiert. Bei einem zweiten Port wird das auf diese Art modifizierte Datum erneut modifiziert, also z.B. weiter inkrementiert oder dekrementiert. Alternativ ist auch eine Modifikation des Datum auf Basis eines ursprünglich beim Hub 32 eingegangenen Datums erfolgt, derart, dass für einen ersten Port eine einmalige Modifikation, für einen zweiten Port eine zweimalige Modifikation, usw. erfolgt. Die Kommunikationsteilnehmer 12, 34 führen einen Vergleich des Datums 16 mit dem Referenzdatum 20 durch und bei einem Übereinstimmen des Datums 16 mit dem Referenzdatum 20 wird dem jeweiligen Kommunikationsteilnehmer 12, für welchen das Datum 16 mit dem Referenzdatum 20 übereinstimmt, die Adresse 22 zugewiesen.

FIG 5 zeigt eine schematische Darstellung eines Kommunikationsteilnehmers 12 zur Verwendung in einem Verfahren wie in FIG 2 bis 4 dargestellt. Dem Kommunikationsteilnehmer 12 ist eine Empfangseinrichtung 38 zum Empfang des Datums 16 (vergl. FIG 2-4) und ein Komparator 40 zum Vergleich des Datums 16 mit dem Referenzdatum 20 (vergl. FIG 2-4) zugeordnet. Des Weiteren umfasst der Kommunikationsteilnehmer 12 eine Verarbeitungseinheit 42, welche zur Zuweisung der Adresse 22 (vergl. FIG 2-4) an den Kommunikationsteilnehmer 12 und zur Übermittlung des Datums 16 an eine Sendeeinrichtung 44 des Kommunikationsteilnehmers 12, jeweils in Abhängigkeit vom Ergebnis des Vergleichs des Datums 16 mit dem Referenzdatum 20, vorgesehen ist. Die Verarbeitungseinheit 42 ist zudem zur Modifizierung des Datums 16, wie oben beschrieben, im Zusammenhang mit dessen Übermittlung an die Sendeeinrichtung 44 vorgesehen.

Das in FIG 1 bis 4 dargestellte Netzwerk 10 kann ein Netzwerk mit Automatisierungsgeräten als Kommunikationsteilnehmern 12, 14, 18, 34 sein und bildet entsprechend ein Automatisierungssystems oder einen Teil eines Automatisierungssystems, das in an sich bekannter Art und Weise zur Steuerung und/oder Überwachung eines technischen Prozesses vorgesehen ist. Insoweit sind die Begriffe Netzwerk 10 und Automatisierungssystem und Kommunikationsteilnehmer 12, 14, 18, 34 und Automatisierungsgerät als synonym aufzufassen.

Damit lässt sich die Erfindung kurz wie folgt darstellen:

Die Erfindung betrifft ein Verfahren zur automatischen Adressvergabe an zumindest einen von einem Netzwerk 10 umfassten Kommunikationsteilnehmer 12, 18, wobei ein von dem Netzwerk 10 ebenfalls umfasster primärer Kommunikationsteilnehmer 14 ein Datum 16 an den oder einen der Kommunikationsteilnehmer 12, 18 übermittelt und wobei der jeweilige Kommunikationsteilnehmer 12, 18 einen Vergleich des Datums 16 mit einem Referenzdatum 20 vornimmt. In Abhängigkeit vom Ergebnis des Vergleichs wird entweder dem jeweiligen Kommunikationsteilnehmer 18 eine Adresse 22 zugewiesen oder das Datum 16 an einen dem jeweiligen Kommunikationsteilnehmer 18 im Netzwerk 10 nachfolgenden Kommunikationsteilnehmer 12 übermittelt und im Zusammenhang mit der Übermittlung des Datums 16 an den nachfolgenden Kommunikationsteilnehmer 12 das Datum 16 modifiziert. Zudem betrifft die Erfindung einen Kommunikationsteilnehmer sowie ein Automatisierungssystem zur Durchführung des Verfahrens sowie ein Automatisierungssystem mit einem solchen Kommunikationsteilnehmer.

## Patentansprüche

1. Verfahren zur automatischen Adressvergabe an zumindest einen, von einem Netzwerk (10) umfassten Kommunikationsteilnehmer (12),
wobei ein von dem Netzwerk (10) ebenfalls umfasster primärer Kommunikationsteilnehmer (14) ein Datum (16) an den oder einen der Kommunikationsteilnehmer (12, 18) übermittelt,
wobei der jeweilige Kommunikationsteilnehmer (12, 18) einen Vergleich des Datums (16) mit einem Referenzdatum (20) vornimmt,
**dadurch gekennzeichnet,**
**dass** bei einem Übereinstimmen des übermittelten Datums (16) mit dem Referenzdatum (20) dem jeweiligen Kommunikationsteilnehmer (12,18) eine Adresse (22) zugewiesen wird oder das bei einem Nicht-Übereinstimmen des Datums (16) mit dem Referenzdatum (20) an einen dem jeweiligen Kommunikationsteilnehmer (18) im Netzwerk (10) nachfolgenden Kommunikationsteilnehmer (12) übermittelt und
im Zusammenhang mit der Übermittlung des Datums (16) an den nachfolgenden Kommunikationsteilnehmer (12) das Datum (16) modifiziert wird.

2. Verfahren nach Anspruch 1, wobei
der primäre Kommunikationsteilnehmer (14) einen das Datum (16) und die Adresse (22) umfassenden Datensatz (24) an den oder einen der Kommunikationsteilnehmer (12, 18) übermittelt.

3. Verfahren nach Anspruch 1 oder 2, wobei
das Modifizieren des Datums (16) dessen Inkrementierung oder Dekrementierung entsprechend einer vorgegebenen oder vorgebbaren Schrittweite umfasst.

4. Verfahren nach Anspruch 3, wobei
die Inkrementierung oder Dekrementierung durch einen Kommunikationsteilnehmer (12, 18, 32, 34) erfolgt.

5. Verfahren nach einem der vorangehenden Ansprüche, wobei
im Zusammenhang mit dem Zuweisen der Adresse (22) an den jeweiligen Kommunikationsteilnehmer durch diesen eine Antwort (26) an einen zu einer Verarbeitung der Antwort (26) vorgesehenen Kommunikationsteilnehmer (12, 14, 18, 32, 34), insbesondere den primären Kommunikationsteilnehmer (14), übermittelt wird.

6. Verfahren nach Anspruch 5, wobei
mit der oder jeder Antwort (26) mindestens ein dem jeweiligen Kommunikationsteilnehmer (12, 18, 34) zugeordnetes Eigenschaftsdatum (28), insbesondere ein Topologiedatum, übermittelt wird.

7. Verfahren nach Anspruch 6, wobei
durch den zu der Verarbeitung der Antwort vorgesehenen Kommunikationsteilnehmer (12, 14, 18, 32, 34), insbesondere den primären Kommunikationsteilnehmer (14), anhand des Topologiedatums als Eigenschaftsdatum (28) eine Topologie des Netzwerks (10) ermittelt wird.

8. Verfahren nach Anspruch 7, wobei
die ermittelte Topologie des Netzwerks (10) von dem primären Kommunikationsteilnehmer (14) ausgewertet wird um auf Basis eines Ergebnisses der Auswertung eine Adressierung von mindestens einem zu übermittelndem Telegramm (30) durchzuführen.

9. Kommunikationsteilnehmer (12) zur Verwendung in einem Verfahren gemäß einem der vorangegangenen Ansprüche mit einer Empfangseinrichtung (38) zum Empfang eines Datums (16) und einem Komparator (40) zum Vergleich des Datums (16) mit einem Referenzdatum (20), **dadurch gekennzeichnet, dass** der Kommunikationsteilnehmer (12) eine Verarbeitungseinheit (42), welche zur Zuweisung einer Adresse (22) an den Kommunikationsteilnehmer (12) und zur Übermittlung des Datums (16) an eine Sendeeinrichtung (44) des Kommunikationsteilnehmers (12) jeweils in Abhängigkeit vom Ergebnis des Vergleichs vorgesehen ist, umfasst und die Verarbeitungseinheit (42) zur Modifizierung des Datums (16) im Zusammenhang mit der Übermittlung des Datums (16) an die Sendeeinrichtung (44) vorgesehen ist.

10. Kommunikationsteilnehmer (12) nach Anspruch 9, wobei
die Verarbeitungseinheit (42) zur Modifizierung des Datums (16) Mittel zur Inkrementierung oder Dekrementierung des Datums entsprechend einer vorgegebenen oder vorgebbaren Schrittweite umfasst.

11. Kommunikationsteilnehmer (12) nach Anspruch 9 oder 10, wobei
die Verarbeitungseinheit (42) im Zusammenhang mit der Zuweisung der Adresse (22) zur Übermittlung einer Antwort (26) an die Sendeeinheit (44) vorgesehen ist.

12. Computerprogramm mit durch einen Computer ausführbaren Programmcodeanweisungen zur Implementierung des Verfahrens nach einem der Ansprüche 1 bis 8 wenn das Computerprogramm auf einem Computer ausgeführt wird.

13. Computerprogrammprodukt, insbesondere Speichermedium, mit einem durch einen Computer ausführbaren Computerprogramm gemäß Anspruch 12.

14. Automatisierungssystem mit Mitteln zur Ausführung des Computerprogramm nach Anspruch 12 zur Durchführung des Verfahrens nach einem der Ansprüche 1 bis 8.

15. Automatisierungssystem mit einem oder mehreren Kommunikationsteilnehmer (12,18,32,34) nach einem der Ansprüche 9 bis 11 und einem primären Kommunikationsteilnehmer (14) mit einer Verarbeitungseinheit (42) die zur Übermittlung eines ein Datum (16) und eine Adresse (22) umfassenden Datensatzes (24) an einen der Kommunikationsteilnehmer (12, 18, 32, 34), der entweder direkt oder indirekt, nämlich über eine kommunikative Verbindung mit einem oder mehreren anderen Kommunikationsteilnehmern (12, 18, 32, 39), mit dem primären Kommunikationsteilnehmer (14) kommunikativ verbindbar ist.

## Claims

1. Method for automatic address allocation to at least one communication partner (12) encompassed by a network (10), whereby a primary communication partner (14) likewise encompassed by the network (10) transfers a data item (16) to the, or one of the, communication partner(s) (12, 18),
whereby the communication partner in question (12, 18) performs a comparison of the data item (16) with a reference data item (20),
**characterised in that**
if the data item (16) transferred matches the reference data item (20) an address (22) is assigned to the communication partner in question (12, 18) or if the data item (16) does not match the reference data item (20) the data item (16) is transferred to a communication partner (12) downstream of the communication partner in question (18) in the network (10) and the data item (16) is modified in conjunction with the transfer of the data item (16) to the downstream communication partner (12).

2. Method according to claim 1, whereby
the primary communication partner (14) transfers a data record (24) comprising the data item (16) and the address (22) to the, or one of the, communication partner(s) (12, 18).

3. Method according to claim 1 or 2, whereby
the modification of the data item (16) consists in incrementing or decrementing it according to a predefined or predefinable step size.

4. Method according to claim 3, whereby
the incrementation or decrementation is effected by a communication partner (12, 18, 32, 34).

5. Method according to one of the preceding claims, whereby
in conjunction with the assignment of the address (22) to the respective communication partner, a response (26) is transferred by the latter to a communication partner (12, 14, 18, 32, 34), particularly the primary communication partner (14), provided for processing the response (26).

6. Method according to claim 5, whereby
at least one attribute data item (28) assigned to the respective communication partner (12, 18, 34), particularly a topology data item, is transferred with the or each response (26) .

7. Method according to claim 6, whereby
a topology of the network (10) is ascertained on the basis of the topology data item as an attribute data item (28) by the communication partner (12, 14, 18, 32, 34), particularly the primary communication partner (14), provided for processing the response.

8. Method according to claim 7, whereby
the ascertained topology of the network (10) is evaluated by the primary communication partner (14) in order to perform an addressing of at least one telegram (30) to be transferred on the basis of a result of the evaluation.

9. Communication partner (12) for use in a method according to one of the preceding claims, having a receiver facility (38) for receiving a data item (16) and a comparator (40) for comparing the data item (16) with a reference data item (20), **characterised in that** the communication partner (12) includes a processing unit (42) which is provided for assigning an address (22) to the communication partner (12) and for transferring the data item (16) to a sender facility (44) of the communication partner (12) depending on the result of the comparison in each case, and the processing unit (42) is provided for modifying the data item (16) in conjunction with the transfer of the data item (16) to the sender facility (44).

10. Communication partner (12) according to claim 9, whereby the processing unit (42) includes means for incrementing or decrementing the data item according to a predefined or predefinable step size in order to modify the data item (16).

11. Communication partner (12) according to claim 9 or 10, whereby
the processing unit (42) is provided for transferring a response (26) to the sending unit (44) in conjunction with the assignment of the address (22).

12. Computer program with program code statements capable of execution by a computer for implementing the method according to one of claims 1 to 8 when the computer program is run on a computer.

13. Computer software product, particularly a storage medium with a computer program according to claim 12, capable of execution by a computer.

14. Automation system with means for executing the computer program according to claim 12 for performing the method according to one of claims 1 to 8.

15. Automation system with one or more communication partners (12, 18, 32, 24) according to one of claims 9 to 11 and a primary communication partner (14) with a processing unit (42) for transferring a data record (24) comprising a data item (16) and an address (22) to one of the communication partners (12, 18, 32, 34) which is capable of being connected communicatively either directly or indirectly, namely by way of a communicative connection to one or more other communication partners (12, 18, 32, 34), to the primary communication partner (14).

## Revendications

1. Procédé d'attribution automatique d'adresses à au moins un terminal (12) de communication compris dans un réseau ( 10 ),
dans lequel un terminal ( 14 ) primaire de communication, compris également dans le réseau ( 10 ), transmet une donnée ( 16 ) au terminal ou à l'un des terminaux ( 12, 18 ) de communication, le terminal ( 12, 18 ) respectif de communication effectuant une comparaison de la donnée ( 16 ) à une donnée ( 20 ) de référence,
**caractérisé**
**en ce que**, si la donnée ( 16 ) transmise coïncide avec la donnée ( 20 ) de référence, il est affecté une adresse ( 22 ) au terminal ( 12, 18 ) respectif de communication,
ou, si la donnée ( 16 ) ne coïncide pas avec la donnée ( 20 ) de référence, elle est transmise à un terminal ( 12 ) de communication suivant dans le réseau ( 10 ) le terminal ( 18 ) respectif de communication et
en relation avec la transmission de la donnée ( 16 ) au terminal ( 12 ) de communication suivant, la donnée ( 16 ) est modifiée.

2. Procédé suivant la revendication 1, dans lequel
le terminal ( 14 ) primaire de communication transmet un jeu ( 24 ) de données comprenant la donnée ( 16 ) et l'adresse ( 22 ) au terminal ou à un terminal ( 12, 18 ) de communication.

3. Procédé suivant la revendication 1 ou 2, dans lequel
la modification de la donnée ( 16 ) comprend son incrémentation ou son décrémentation conformément à un pas de progression prescrit ou pouvant l'être.

4. Procédé suivant la revendication 3, dans lequel
l'incrémentation ou la décrémentation s'effectue par un terminal ( 12, 18, 32, 34 ) de communication.

5. Procédé suivant l'une des revendications précédentes, dans lequel
en liaison avec l'attribution de l'adresse ( 22 ) au terminal respectif de communication, il est transmis par celui-ci une réponse ( 26 ) à un terminal ( 12, 14, 18, 32, 34 ) de communication prévu pour un traitement de la réponse ( 26 ), notamment au terminal ( 14 ) primaire de communication.

6. Procédé suivant la revendication 5, dans lequel
avec la réponse ( 26 ) ou chaque réponse ( 26 ), il est transmis au moins une donnée ( 28 ) de propriété, notamment une donnée de topologie associée au terminal ( 12, 18, 34 ) respectif de communication.

7. Procédé suivant la revendication 6, dans lequel
il est déterminé par le terminal ( 12, 14, 18, 32, 34 ) de communication prévu pour le traitement de la réponse, notamment par le terminal ( 14 ) primaire de communication, une topologie du réseau ( 10 ) au moyen de la donnée de topologie en tant que donnée ( 28 ) de propriété.

8. Procédé suivant la revendication 7, dans lequel
la topologie déterminée du réseau ( 10 ) est exploitée par le terminal ( 14 ) primaire de communication, pour effectuer, sur la base d'un résultat de l'exploitation, un adressage d'au moins un télégramme ( 30 ) à transmettre.

9. Terminal ( 12 ) de communication à utiliser dans un procédé suivant l'une des revendications précédentes, comprenant un dispositif ( 38 ) de réception, une donnée ( 16 ) et un comparateur ( 40 ) de comparaison de la donnée ( 16 ) à une donnée ( 20 ) de référence, **caractérisé en ce que** le terminal ( 12 ) de communication comprend une unité ( 42 ) de traitement qui est destinée à affecter une adresse ( 22 ) au terminal ( 12 ) de communication et à transmettre la donnée ( 16 ) à un dispositif ( 44 ) d'émission de le terminal ( 12 ) de communication respectivement en fonction du résultat de la comparaison et l'unité ( 42 ) de traitement est destinée à modifier la donnée ( 16 ) en relation avec la transmission de la donnée ( 16 ) au dispositif ( 44 ) d'émission.

10. Terminal ( 12 ) de communication suivant la revendication 9, dans lequel
l'unité ( 42 ) de traitement comprend, pour la modification de la donnée ( 16 ), des moyens d'incrémentation ou de décrémentation de la donnée conformément à un pas de progression prescrit ou pouvant l'être.

11. Terminal ( 12 ) de communication suivant la revendication 9 ou 10, dans lequel
l'unité ( 42 ) de traitement est destinée, en relation avec l'affectation de l'adresse ( 22 ), à la transmission d'une réponse ( 26 ) à l'unité ( 44 ) d'émission.

12. Programme informatique ayant des instructions de code de programme pouvant être réalisées par un ordinateur, pour la mise en oeuvre du procédé suivant l'une des revendications 1 à 8, lorsque le programme informatique est réalisé sur un ordinateur.

13. Produit de programme informatique, notamment support de mémoire, ayant un programme informatique pouvant être réalisé par un ordinateur suivant la revendication 12.

14. Système d'automatisation ayant des moyens de réalisation du programme informatique suivant la revendication 12, pour la mise en oeuvre du procédé suivant l'une des revendications 1 à 8.

15. Système d'automatisation comprenant un ou plusieurs terminaux ( 12, 18, 32, 34 ) de communication suivant l'une des revendications 9 à 11 et un terminal ( 14 ) primaire de communication, ayant une unité ( 42 ) de traitement qui, pour la transmission d'un jeu ( 24 ) de données comprenant une donnée ( 16 ) et une adresse ( 22 ) à l'un des terminaux ( 12, 18, 32, 34 ) de communication, peut être reliée de manière à communiquer directement ou indirectement, à savoir par une liaison de communication avec un terminal ou avec plusieurs autres terminaux ( 12, 18, 32, 34 ) de communication, au terminal ( 14 ) primaire de communication.
